# EUROPEAN PATENT APPLICATION

(11) **EP 1 094 093 A2**
(43) Date of publication of application: **25.04.2001**
(21) Application number: 00309250.9
(22) Date of filing: 20.10.2000
(51) Int. Cl.: C08L 69/00, C08L 101/00

(54) **Flame-resistant thermoplastic resin composition**

(30) Priority: 21.10.1999 JP 29924299
(71) Applicant: Dow Corning Toray Silicone Co., Ltd., Tokyo (JP)
(72) Inventor: Furukawa, Haruhiko, Dow Corning Toray Silicone C., Ichihara-shi, Chiba Prefecture (JP); Hatanaka, Hidekatsu, Dow Corning Toray Silicone C., Ichihara-shi, Chiba Prefecture (JP); Shiromoto, Koji, Dow Corning Toray Silicone C., Ichihara-shi, Chiba Prefecture (JP); Ueki, Hiroshi, Dow Corning Toray Silicone C., Ichihara-shi, Chiba Prefecture (JP); Morita, Yoshitsugu, Dow Corning Toray Silc. C., Ichihara-shi, Chiba Prefecture (JP)
(74) Representative: Kyle, Diana

(57) **Abstract**

A flame-resistant thermoplastic resin composition comprising (A) 100 weight parts of a thermoplastic resin having an aromatic ring in its main chain; (B) 0.01 to 50 weight parts of a branched organopolysiloxane having siloxane units described by average unit formula RₐSiO_{(4-a)/2}; where R is a monovalent group selected from the group consisting of C₁ to C₁₂ alkyl groups, C₆ to C₁₂ aryl groups, C₁ to C₁₂ alkoxy groups, and the hydroxyl group, with the aryl group content being 50 to 100 mol% of the combined content of alkyl groups and aryl groups, and a is a number from 0.75 to 2.5; and (C) 0.01 to 5 weight parts fluororesin powder.

## Description

The present invention relates to a flame-resistant thermoplastic resin composition, and more particularly relates to a flame-resistant thermoplastic resin composition with superior flame resistance, and to a method for manufacturing the same.

Thermoplastic resins having an aromatic ring on their main chain, typified by aromatic polycarbonate resins, have excellent mechanical strength, electrical characteristics, and so on, and are therefore widely utilized as engineering plastics in such fields as electrical and electronic devices, automobiles, and construction. These thermoplastic resins are often rendered flame resistant for the purpose of fire safety.

Numerous compositions containing a silicone resin have been proposed in the past in an effort to obtain a flame-resistant thermoplastic resin. For instance, Japanese Laid-Open Patent Application H8-176425 discusses a composition composed of an aromatic polycarbonate resin and a silicone resin that is itself composed of a co-hydrolyzate of an epoxy group-containing alkoxysilane and a phenyl group-containing alkoxysilane. The problem with this composition, however, is that the presence of epoxy groups diminishes the heat resistance and causes discoloration. Japanese Laid-Open Patent Application H10-139964 discusses a flame-resistant resin composition composed of a polycarbonate resin and a silicone resin that is composed of difunctional siloxane units (D units) and trifunctional siloxane units (T units). Japanese Laid-Open Patent Application H11-140294 discusses a flame-resistant resin composition composed of an aromatic polycarbonate resin and a silicone resin that is composed of phenyl group-containing difunctional siloxane units (D units) and trifunctional siloxane units (T units). Furthermore, Japanese Laid-Open Patent Application H11-222559 discusses a flame-resistant resin composition composed of a synthetic resin containing aromatic rings and a silicone resin that is composed of phenyl group- and alkoxy group-containing difunctional siloxane units (D units) and trifunctional siloxane units (T units). These aromatic polycarbonate resin compositions and flame-resistant resin compositions do not necessarily have adequate flame resistance, and are unsatisfactory for certain applications.

As a result of diligent investigation aimed at solving the above problems, the inventors arrived at the present invention upon discovering that flame resistance is markedly enhanced by compounding a special branched organopolysiloxane and fluororesin powder with an aromatic polycarbonate resin. Specifically, it is an object of the present invention to provide a flame-resistant thermoplastic resin composition with superior flame resistance.

The present invention is a flame-resistant thermoplastic resin composition comprising:
(A) 100 weight parts of a thermoplastic resin having an aromatic ring in its main chain;
(B) 0.01 to 50 weight parts of a branched organopolysiloxane having siloxane units described by average unit formula RₐSiO_{(4-a)/2} ; where R is a monovalent group selected from the group consisting of C₁ to C₁₂ alkyl groups, C₆ to C₁₂ aryl groups, C₁ to C₁₂ alkoxy groups, and the hydroxyl group, with the aryl group content being 50 to 100 mol% of the combined content of alkyl groups and aryl groups, and a is a number from 0.75 to 2.5; and
(C) 0.01 to 5 weight parts fluororesin powder.

The present invention is a flame-resistant thermoplastic resin composition comprising:
(A) 100 weight parts of a thermoplastic resin having an aromatic ring in its main chain;
(B) 0.01 to 50 weight parts of a branched organopolysiloxane having siloxane units described by average unit formula RₐSiO_{(4-a)/2}; where R is a monovalent group selected from the group consisting of C₁ to C₁₂ alkyl groups, C₆ to C₁₂ aryl groups, C₁ to C₁₂ alkoxy groups, and the hydroxyl group, with the aryl group content being 50 to 100 mol% of the combined content of alkyl groups and aryl groups, and a is a number from 0.75 to 2.5; and
(C) 0.01 to 5 weight parts fluororesin powder.

There are no particular restrictions on the type of component A used in the present invention, as long as it is a thermoplastic resin having an aromatic ring on its main chain. Examples of such thermoplastic resins include aromatic polycarbonate resins and copolymers thereof, polyphenylene ether resins and copolymers thereof, polyallylate resins, polysulfone resins, polyethylene terephthalate resins, polybutylene terephthalate resins, and other such aromatic polyester resins; aromatic polyamide resins; polyimide resins; polyamidoimide resins; polyphenylene sulfide resins; and mixtures of these organic resins. Of these, aromatic polycarbonate resins and copolymers thereof are particularly favorable.

The branched organopolysiloxane comprising component B serves to enhance the flame resistance of the present composition. This component B is a branched organopolysiloxane having siloxane units described by the average unit formula RₐSiO_{(4-a)/2} ; where R is a monovalent group selected from the group consisting of C₁ to C₁₂ alkyl groups, C₆ to C₁₂ aryl groups, C₁ to C₁₂ alkoxy groups, and the hydroxyl group, with the aryl group content being 50 to 100 mol% of the combined content of alkyl groups and aryl groups, and a is a number from 0.75 to 2.5, and has at least a siloxane unit described by the formula RSiO_{3/2} ,where R is defined the same as above, in its molecule. In the above formula, examples of C₁ to C₁₂ alkyl groups include the methyl, ethyl, n-propyl, isopropyl, butyl, and hexyl, of which methyl, ethyl, and isopropyl are preferred. Examples of C₆ to C₁₂ aryl groups include phenyl, naphthyl, and tolyl, of which phenyl is preferred. Examples of C₁ to C₁₂ alkoxy groups include methoxy, ethoxy, n-propoxy, isopropoxy, and butoxy.

The aryl group content of component (B) must be 50 to 100 mol% of the combined content of alkyl groups and aryl groups, with at least 60 mol% being preferable, at least 70 mol% being even better, and at least 80 mol% being especially favorable. It is also preferable for the alkoxy group content of component B to be no more than 10 wt%, and for the hydroxyl group content of component B to be no more than 10 wt%.

It is preferable for the weight average molecular weight of component (B) to be at least 300 and less than 10,000. This is because problems such as a decrease in the moldability of the present will be encountered if the weight average molecular weight exceeds 10,000. This weight average molecular weight is usually quantified by gel permeation chromatography (GPC).

Component B has at least a trifunctional siloxane unit (T unit) described by formula RSiO_{3/2} , where R is defined the same as above, in its molecule, but can also contain a difunctional siloxane unit (D unit) described by formula R₂SiO_{2/2} ,where R is defined the same as above, in addition to the trifunctional siloxane unit (T unit). Furthermore, to the extent that the object of the present invention is not compromised, component B may contain a small amount of monofunctional siloxane units (M units) described by R₃SiO_{1/2} , where R is defined the same as above, or quadrifunctional siloxane units (Q units) described by SiO_{4/2}.

A branched organopolysiloxane described by the following average molecular formula is preferably as component B

(R¹ ₃SiO_{1/2})ₐ(R¹ ₂SiO_{2/2})_{b}(R¹SiO_{3/2})_{c}(SiO_{4/2})_{d}(R²O_{1/2})ₑ

In the formula, R¹ is a C₁ to C₁₂ alkyl group or a C₆ to C₁₂ aryl group. Examples of C₁ to C₁₂ alkyl groups include methyl, ethyl, n-propyl, isopropyl, butyl, and hexyl, of which methyl, ethyl, and propyl are preferred. Examples of C₆ to C₁₂ aryl groups include phenyl, naphthyl, and tolyl, of which phenyl is preferred. R² is a C₁ to C₁₂ alkyl group or a hydrogen atom. Examples of C₁ to C₁₂ alkyl groups include methyl, ethyl, n-propyl, isopropyl, butyl, and hexyl, of which methyl and ethyl are preferred. Subscript a is zero or a positive number, b is zero or a positive number, c is a positive number, d is zero or a positive number, and e is zero or a positive number.

It is preferable for component B to have a softening point that is lower than the softening point of the thermoplastic resin of component A, and even better for this softening point to be 300°C or lower. If component A is a thermoplastic resin having a relatively low softening point, it is preferable for the softening point of component B to be 200°C or lower.

The proportion in which component (B) is compounded into the composition is 0.01 to 50 weight parts, and preferably from 0.1 to 30 weight parts, and even more preferably 0.1 to 10 weight parts, per 100 weight parts of the thermoplastic resin. The desired flame resistance will not be imparted to the thermoplastic resin composition if component (B) is compounded in an amount less than 0.01 weight part, but the mechanical strength of the thermoplastic resin composition will decrease if 50 weight parts is exceeded.

When used together with component B, the fluororesin powder comprising component C serves to enhance the flame resistance of the present composition. Examples of this fluororesin powder include a fluoroethylene resin powder (a polymer of a monomer in which one or more of the hydrogen atoms of the ethylene have been substituted with one or more fluorine atoms, a typical example of which is a tetrafluoroethylene resin powder), trifluorochloroethylene resin powder, tetrafluoroethylene hexafluoropropylene resin powder, vinyl fluoride resin powder, vinylidene fluoride resin powder, and difluorodichloroethylene resin powder. There are no particular restrictions on the particle size of these fluororesin powders, but it is preferable for the average particle diameter to be between 0.01 µm and 1 mm, with a range of 0.01 to 100 µm being even better. This component is compounded into the present composition in an amount of 0.01 to 5 weight parts per 100 weight parts of component (A).

The present composition is composed of the above components A to C, but in addition to these components, various other additives that are commonly added to thermoplastic resins having an aromatic ring on the main chain may also be compounded, as long as the object of the present invention is not compromised. Examples of such additives include glass fiber, glass beads, glass flakes, carbon black, calcium sulfate, calcium carbonate, calcium silicate, titanium oxide, alumina, silica, asbestos, talc, clay, mica, quartz powder, and other such inorganic fillers; synthetic resins, elastomers, and other such organic resin additives; antioxidants such as those based on a hindered phenol, phosphorous ester, phosphoric ester, or amine; aliphatic carboxylic esters, paraffins, polyethylene waxes, and other such lubricants; various organic and inorganic pigments and colorants; UV absorbents such as those based on benzotriazole or benzophenone; photostabilizers such as those based on a hindered amine; various known flame retardants; organic alkali metal salts, alkaline earth metal salts, and other flame resistance auxiliaries; release agents; and antistatic agents.

The flame-resistant thermoplastic resin composition of the present invention is easily manufactured by uniformly mixing components A to C. Examples of the apparatus used to mix these components include a ribbon blender, Henschell mixer, Banbury mixer, drum tumbler, single-screw extruder, twin-screw extruder, co-kneader, and multi-screw extruder. It is advantageous for the thermoplastic resin composition of the present invention to be mixed while the above components are heated. The mixing temperature in this case is preferable between 240°C and 350°C.

The flame-resistant thermoplastic resin composition of the present invention as described above has excellent moldability, and can be easily molded into a variety of shapes by a standard plastic molding method, such as injection molding or extrusion molding. Because the molded article thus obtained is characterized by excellent flame resistance, it can be used in applications that demand this characteristic.

The present invention will now be described through working examples. In these examples, the viscosity values were measured at 25°C, and all parts are by weight. Also, the term flame resistance as used in these working examples refers to the oxygen index measured according to "Method for Testing Combustion of Plastics by Oxygen Index Method" set forth in JIS K 7201.

The branched organopolysiloxanes SR1, SR2, SR3, and SR4 used in the working examples had the average unit formulas and average molecular formulas given in Table 1 below, and had the characteristics given in Table 2 below. In Table 1, Me is a methyl group, Ph a phenyl group, D an Me₂SiO_{2/2} unit, T an Me SiO_{3/2} unit, and T^{Ph} a PhSiO_{3/2} unit. The chemical structure of these branched organopolysiloxanes was analyzed using the nuclear magnetic resonance (NMR) spectrum, and the weight average molecular weight was measured using gel permeation chromatography (GPC). The weight average molecular weight is the value converted for standard polystyrene with a known molecular weight.

**Table 1**

| Branched organopolysiloxane | Average unit formula | Average molecular formula |
|---|---|---|
| SR1 | Me_{0.18}Ph_{0.91}(HO)_{0.01}SiO_{1.41} | D_{0.09}T^{Ph}_{0.9}(HO_{1/2})_{0.01} |
| SR2 | Pr_{0.30}Ph_{0.70}(HO)_{0.44}SiO_{1.25} | T^{Pr}_{0.30}T^{Ph}_{0.70}(HO_{1/2})_{0.35} |
| SR3 | Me_{0.50}Ph_{0.65}(HO)_{0.35}SiO_{1.25} | D_{0.5}D^{Ph}_{0.10}T_{0.45}T^{Ph}_{0.40}(HO_{1/2})_{0.35} |
| SR4 | Me_{0.63}Ph_{0.75}(HO)_{0.06}SiO_{1.28} | D_{0.19}D^{Ph2}_{0.19}T_{0.25}T^{Ph}0.37(HO_{1/2})_{0.06} |

**Table 2**

| Branched organo-polysiloxane | Aryl group content (mol%) | Alkoxy group content (wt%) | Hydroxyl group content (wt%) | Proportion of D and T units | Weight average molecular weight | Softening point (° C) |
|---|---|---|---|---|---|---|
| SR1 | 83 | 0 | 0.1 | 10:90 | 2200 | 130-170 |
| SR2 | 70 | 0 | 6.0 | 0:100 | 2300 | 40-80 |
| SR3 | 57 | 0 | 5.3 | 15:85 | 3300 | 40-80 |
| SR4 | 54 | 0 | 0.9 | 28:52 | 34,000 | 40-80 |

### Working Examples 1 to 6 and Comparative Examples 1 to 4

An aromatic polycarbonate resin (Tuflon A1900, trade name of Idemitsu Petrochemical) was used as the thermoplastic resin having an aromatic ring on the main chain. Three types of fluoroethylene resin powder (Teflon powder) A (particle size: 0.1 to 10 µm), B (particle size: 1 to 30 µm) and C (particle size: 0.1 to 0.7 µm) were used as the fluororesin powder. SR1 to SR4 given in Table 1 above were used as the branched organopolysiloxanes. These components were mixed in the mixing ratios shown in Tables 3 to 5 below to obtain flame-resistant polycarbonate resin compositions. The mixing was accomplished by the following method. The polycarbonate resin was put into a mixing apparatus (laboratory plastomill), heated to between 280 and 320°C, and melted. The branched organopolysiloxane was then added and mixed in, and finally the Teflon powder was added and mixed to manufacture a polycarbonate resin composition. This composition was injection molded at a molding temperature of 280 to 320°C. The oxygen index of the molded article thus obtained was measured, and these measurement results are reported in Tables 3 and 4 below.

**Table 3**

| | Working Ex. 1 | Working Ex. 2 | Working Ex. 3 | Working Ex. 4 |
|---|---|---|---|---|
| Composition | | | | |
| Thermoplastic resin | | | | |
| Polycarbonate | 100 parts | 100 parts | 100 parts | 100 parts |
| | | | | |
| Branched organopolysiloxane | | | | |
| SR1 | 5 | 5 | 5 | |
| SR2 | | | | 5 |
| | | | | |
| Fluororesin powder | | | | |
| A (particle size: 0.1 to 10 µm) | 0.5 | | | 0.5 |
| B (particle size: 1 to 30 µm) | | 0.5 | | |
| C (particle size: 0.1 to 0.7 µm) | | | 0.5 | |
| | | | | |

| Characteristics | | | | |
|---|---|---|---|---|
| Oxygen index | 40 | 38 | 37 | 32 |

**Table 4**

| | Working Ex. 5 | Working Ex. 6 |
|---|---|---|
| Composition | | |
| Thermoplastic resin | | |
| Polycarbonate | 100 parts | 100 parts |
| | | |
| Branched organopolysiloxane | | |
| SR3 | 5 | |
| SR4 | | 5 |
| | | |
| Fluororesin powder A | | |
| (particle size: 0.1 to 10 µm) | 0.5 | 0.5 |
| | | |

| Characteristics | | |
|---|---|---|
| Oxygen index | 32 | 32 |

**Table 5**

| | Comp. Ex. 1 | Comp. Ex. 2 | Comp. Ex. 3 | Comp. Ex. 4 |
|---|---|---|---|---|
| Composition | | | | |
| Thermoplastic resin | | | | |
| Polycarbonate | 100 parts | 100 parts | 100 parts | 100 parts |
| | | | | |
| Branched organopolysiloxane | | | | |
| SR1 | 5 | | | |
| SR2 | | 5 | | |
| SR3 | | | 5 | |
| SR4 | | | | 5 |
| | | | | |

| Characteristics | | | | |
|---|---|---|---|---|
| Oxygen index | 33 | 28 | 30 | 28 |

## Claims

1. A flame-resistant thermoplastic resin composition comprising
(A) 100 weight parts of a thermoplastic resin having an aromatic ring in its main chain;
(B) 0.01 to 50 weight parts of a branched organopolysiloxane having siloxane units of average unit formula RₐSiO_{(4-a)/2}; where R is a monovalent group selected from C₁ to C₁₂ alkyl groups, C₆ to C₁₂ aryl groups, C₁ to C₁₂ alkoxy groups, and the hydroxyl group, with the aryl group content being 50 to 100 mol% of the combined content of alkyl groups and aryl groups, and a is a number from 0.75 to 2.5; and
(C) 0.01 to 5 weight parts of a fluororesin powder.

2. The flame-resistant thermoplastic resin composition according to Claim 1, wherein component (B) is a branched organopolysiloxane of average molecular formula (R¹₃SiO_{1/2})ₐ(R¹₂SiO_{2/2})_{b}(R¹SiO_{3/2})c(SiO_{4/2})_{d}(R²O_{1/2})ₑ; where R¹ is a C₁ to C₁₂ alkyl group or a C₆ to C₁₂ aryl group, R² is a hydrogen atom or a C₁ to C₁₂ alkyl group, with the aryl group content being 50 to 100 mol% of the combined content of alkyl groups and aryl groups, a is zero or a positive number, b is zero or a positive number, c is a positive number, d is zero or a positive number, and e is zero or a positive number.

3. The flame-resistant thermoplastic resin composition according to Claim 1 or 2, wherein component (A) is a thermoplastic resin selected from aromatic polycarbonate resins and copolymers thereof.

4. The flame-resistant thermoplastic resin composition according to any of Claims 1 to 3, wherein the hydroxyl group content in component (B) is no more than 10 wt%.

5. The flame-resistant thermoplastic resin composition according to any of Claims 1 to 3, wherein the alkoxy group content in component (B) is no more than 10 wt%.

6. The flame-resistant thermoplastic resin composition according to any of Claims 1 to 3, wherein the alkyl group in component (B) is selected from methyl, ethyl, and propyl and the aryl group is phenyl.

7. The flame-resistant thermoplastic resin composition according to any of Claims 1 to 6, wherein the weight average molecular weight of component (B) is 300 to 10,000.

8. The flame-resistant thermoplastic resin composition according to any of Claims 1 to 7, wherein component (B) is solid at room temperature.

9. The flame-resistant thermoplastic resin composition according to any of Claims 1 to 8, wherein the particle diameter of component (C) is 0.01 µm to 1 mm.

10. The flame-resistant thermoplastic resin composition according to any of Claims 1 to 9, wherein the aryl content of component (B) is at least 80 mol% of the combined content of alkyl groups and aryl groups.
